# EUROPÄISCHE PATENTSCHRIFT

(11) **EP 0 791 155 B1**
(45) Veröffentlichungstag und Bekanntmachung des Hinweises auf die Patenterteilung: **01.07.1998**
(21) Anmeldenummer: 95936558.6
(22) Anmeldetag: 26.10.1995
(51) Int. Cl.: F16L 59/06, F16L 59/02

(54) **WÄRMEISOLIERENDER KÖRPER**
HEAT-INSULATING BODY
CORPS THERMO-ISOLANT

(30) Priorität: 04.11.1994 DE 4439331; 24.03.1995 DE 19510767
(43) Veröffentlichungstag der Anmeldung: 27.08.1997
(73) Patentinhaber: BAYER AG, 51368 Leverkusen (DE)
(72) Erfinder: DIETRICH, Karl-Werner, D-51519 Odenthal (DE); THOMAS, Heinz, D-42799 Leichlingen (DE)
(86) Internationale Anmeldenummer: EP9504218
(87) Internationale Veröffentlichungsnummer: WO9614538

(56) Entgegenhaltungen:
- EP-A- 0 099 574
- EP-A- 0 132 477
- EP-A- 0 585 547
- DE-A- 4 240 854
- DE-C- 4 141 524
- US-A- 5 273 801

## Beschreibung

Es ist bekannt, wärmeisolierende Körper (Vakuumpaneele) aus einem porösen Material und einer allseitig umhüllenden gasdichten Folie herzustellen, wobei der durch das poröse Material gebildete "Hohlraum" evakuiert wird. Das poröse Material kann entweder aus einem porigen Schüttgut oder aber aus einem harten Schaumstoff bestehen. Die Folie besteht üblicherweise aus Kombinationen von mehreren Schichten, wobei durch die verschiedenen Schichten unterschiedliche Aufgaben, wie Diffusionssperre gegenüber verschiedenen Gasen und mechanische Verfestigung, gelöst werden.

Die meisten marktgängigen Vakuumpaneele haben einen Kern aus anorganischer Schüttung, üblicherweise auf Silikat-Basis.

In der EP-B-188 806 werden harte Schaumstoffe auf Polyurethan-(PUR)-Basis als Füllmaterial für Vakuumpaneele beschrieben. Das Problem bei diesem Verfahren ist, durch genaue Rezepturwahl und durch Einhalten bestimmter Verfahrensparameter die erforderliche Offenzelligkeit zu erreichen, da PUR-Hartschaumstoffe vorwiegend geschlossenzellig sind. Ein weiteres Problem bei der Verwendung von PUR-Hartschaumstoffen als Trägermaterial für Vakuumpaneele stellt das Ausgasen flüchtiger Bestandteile wie Amine, Treibmittel, evtl. auch Monomere, dar.

Ein Vorteil von harten PUR-Schaumstoffen gegenüber porösen anorganischen Schüttungen ist andererseits ihre genaue Dimensionierung als fertiges Vakuum-paneel, sowie ihre Maßhaltigkeit.

Überraschenderweise wurde nun gefunden, daß man ein ausgezeichnetes Trägermaterial für Vakuumpaneele auf wirtschaftliche Weise herstellen kann, indem man durch Zermahlen von Hartschaumstoffen eine poröse Schüttung herstellt und diese - ähnlich wie poröse Silikatschüttungen - zu Vakuumpaneelen verarbeitet. Hierbei werden bevorzugt Hartschaumstoffe verwendet, wie sie beim Recycling von Wertstoffen anfallen, und hierbei ist besonders bevorzugt der beim Recycling von Kühlschränken anfallende PUR-Schaumstoff.

Gegenstand der Erfindung ist somit ein wärmeisolierender Körper, bestehend aus
a) einem zu Pulver zerkleinerten harten Kunststoffschaumstoff und gegebenenfalls einem anorganischen porösen Material und aus
b) einer die Komponente a) umhüllenden Folie,
wobei die die Komponente a) umhüllende Folie evakuiert und dann hermetisch versiegelt worden ist.

Erfindungsgemäß bevorzugt ist, daß
- der zu zerkleinernde Kunststoff-Schaumstoff ein Polyurethanschaumstoff ist, der vorzugsweise aus dem Recycling-Prozeß alter Kühlschränke stammt,
- das Kunststoff-Schaumstoff-Pulver eine Teilchengröße von 0,01 mm bis 1 mm hat,
- das Kunststoff-Schaumstoff-Pulver vor der Umhüllung mit der Folie durch Tempern bei Temperaturen von 50 bis 250°C, vorzugsweise bei 120 bis 200°C, gegebenenfalls bei niedrigem Druck, von flüchtigen Bestandteilen befreit worden ist,
- das Kunststoff-Schaumstoff-Pulver vor dem Umhüllen mit der Folie bei Drücken von 0,5 bis 5, vorzugsweise 1 bis 3 bar, vorgepreßt wird und
- als umhüllende Folie eine mehrschichtige Folie, vorzugsweise eine Polyethylen/Aluminiumfolie oder Polyethylen/Polyvinylalkoholfolie, verwendet wird,
- als anorganisches poröses Material poröse Silikate eingesetzt werden.

Für das erfindungsgemäß hergestellte Vakuumpaneel kommen alle bekannten Folien, z.B. Kombinationsfolien, wie sie auch bei der Herstellung von handelsüblichen Vakuumpaneelen verwendet werden, in Betracht. Beispielhaft seien genannt: Kombination von Polyethylenfolie mit Polyvinylalkoholfolie oder Polyethylenfolie mit Aluminiumfolie.

Als erfindungsgemäß zu verwendende Schaumstoffe kommen grundsätzlich alle harten Kunststoffschäume in Betracht. Harte Polyurethanschaumstoffe sind bevorzugt. Obgleich die für Vakuumpaneele verwendeten Folien bereits eine hohe Gasdichtigkeit besitzen, sind sie dennoch keine Gas-/Dampfsperre. Insbesondere eindringender Wasserdampf kann das Vakuum und damit die Wärmedämmeigenschaften des Vakuumpaneels negativ beeinflussen. Um dies zu vermeiden, können erfindungsgemäß dampfabsorbierende Substanzen, wie z.B. solche auf Silikat- oder Aluminiumoxid-Basis in Mengen von 10 bis 90, vorzugsweise 20 bis 50 Gew.-%, mitverwendet werden.

Das Zerkleinern des Hartschaumstoffes kann erfindungsgemäß z.B. durch Mahlen, Schleifen oder Zerrupfen erfolgen; gegebenenfalls können auch größere Schaumstücke einfach zerdrückt werden.

Die Feinheit der Porösität kann erfindungsgemäß eingestellt werden, einerseits durch die Intensität des Mahlvorganges, andererseits durch die Feinheit der Zellstruktur des zu zermahlenden Schaumstoffes.

Erfindungsgemäß von Vorteil kann ein Vorpressen des Schaumstoff-Pulvers bei Drücken von 0,5 bis 5 bar, vorzugsweise 1 bis 3bar, sein, wobei dann anschließend der Preßling zum Vakuumpaneel verarbeitet wird.

Als erfindungsgemäß gegebenenfalls einzusetzendes anorganisches poröses Material kommen vorzugsweise poröse Silikate in Betracht. Das poröse anorganische Material wird gegebenenfalls in einer Menge von 0,1 bis 80 Gew.-%, vorzugsweise von 20 bis 50 Gew.-%, bezogen auf den zu Pulver zerkleinerten harten Kunststoffschaum, mitverwendet.

### Ausführungsbeispiel

1 000 g PUR-Hartschaummehl - gewonnen aus einem zerlegten Altkühlgerät durch Zermahlen des darin enthaltenen Schaumstoffes - werden bei 2,5 bar vorgepreßt. Der so erhaltene ca. 2 cm dicke Preßling wird nach 2stündigem Trocknen bei 100°C auf die Maße 40 × 40 cm geschnitten und anschließend mit einer Folie bestehend aus den Schichten
Polyethylen/Polyvinylalkohol/Polyethylen
umhüllt.

Der so erhaltene mit PUR-Mehl gefüllte "Beutel" wird auf 0,001 bar evakuiert. Unter Vakuum werden die Kanten der Folie verschweißt. Das so erhaltene Vakuum-Paneel hat eine Wärmeleitzahl λ von 10 mW/°Km.

## Patentansprüche

1. Wärmeisolierender Körper, bestehend aus
a) einem zu Pulver zerkleinerten harten Kunststoffschaumstoff und gegebenenfalls einem anorganischen porösen Material und aus
b) einer die Komponente a) umhüllenden Folie,
wobei die die Komponente a) umhüllende Folie evakuiert und dann hermetisch versiegelt worden ist.

2. Wärmeisolierender Körper gemäß Anspruch 1, dadurch gekennzeichnet, daß der zu zerkleinernde Kunststoff-Schaumstoff ein harter Polyurethanschaumstoff ist.

3. Wärmeisolierender Körper gemäß Anspruch 1 bis 2, dadurch gekennzeichnet, daß das Kunststoffschaumstoff-Pulver eine Teilchengröße von 0,01 bis 1 mm hat.

4. Wärmeisolierender Körper gemäß Anspruch 1 bis 3, dadurch gekennzeichnet, daß das Kunststoffschaumstoff-Pulver vor der Umhüllung der Folie durch Tempern bei Temperaturen von 50 bis 250°C, vorzugsweise 120 bis 200°C, gegebenenfalls bei niedrigem Druck, von flüchtigen Bestandteilen befreit worden ist.

5. Wärmeisolierender Körper gemäß Anspruch 1 bis 4, dadurch gekennzeichnet, daß das Kunststoffschaumstoff-Pulver bei Drücken von 0,5 bis 5, vorzugsweise 1 bis 3 bar, vorgepreßt wird.

6. Wärmeisolierender Körper gemäß Anspruch 1 bis 5, dadurch gekennzeichnet, daß als umhüllende Folie eine mehrschichtige Folie, vorzugsweise eine Polyethylen/Aluminiumfolie oder Polyethylen/Polyvinylalkoholfolie, verwendet wird.

7. Wärmeisolierender Körper gemäß Anspruch 1 bis 6, dadurch gekennzeichnet, daß als anorganisches poröses Material poröse Silikate eingesetzt werden.

## Claims

1. A heat insulating body comprising
a) a rigid foamed plastic material comminuted to a powder and optionally an inorganic porous material, and
b) a sheet which clads component a),
wherein the sheet which clads component a) has been evacuated and then hermetically sealed.

2. A heat insulating body according to claim 1, characterised in that the foamed plastic material to be comminuted is a rigid polyurethane foamed material.

3. A heat insulating body according to claim 1 or 2, characterised in that the foamed plastic material powder has a particle size from 0.01 mm to 1 mm.

4. A heat insulating body according to any of claims 1 to 3, characterised in that before being clad with the sheet, the foamed plastic material has been freed from volatile constituents by heating at temperatures from 50 to 250°C, preferably 120 to 200°C, optionally under low pressure.

5. A heat insulating body according to any of claims 1 to 4, characterised in that the foamed plastic material powder is pre-pressed at pressures of 0.5 to 5 bar, preferably 1 to 3 bar.

6. A heat insulating body according to any of claims 1 to 5, characterised in that a multilayer sheet, preferably a polyethylene/aluminium sheet or a polyethylene/polyvinyl alcohol sheet, is used as the cladding sheet.

7. A heat insulating body according to any of claims 1 to 6, characterised in that porous silicates are used as the inorganic porous material.

## Revendications

1. Corps thermo-isolant composé
a) d'une mousse de matière synthétique dure broyée en poudre et, le cas échéant, d'un matériau poreux inorganique, et
b) d'une peau enveloppant le composant a)
la peau enveloppant le composant a) ayant été mise sous vide puis scellée hermétiquement.

2. Corps thermo-isolant selon la revendication 1, caractérisé en ce que la mousse de matière synthétique qu'il s'agit de broyer est une mousse de polyuréthanne dure.

3. Corps thermo-isolant selon une des revendications 1 à 2, caractérisé en ce que la poudre de mousse de matière synthétique présente une granularité de 0,01 à 1 mm.

4. Corps thermo-isolant selon une des revendications 1 à 3, caractérisé en ce que la poudre de mousse de matière synthétique a été débarrassée de composants volatils avant son enrobage avec la feuille, par étuvage à des températures de 50 à 250 °C, de préférence de 120 à 200 °C, le cas échéant sous basse pression.

5. Corps thermo-isolant selon une des revendications 1 à 4, caractérisé en ce que la poudre de mousse de matière synthétique est soumise à une compression préalable à des pressions de 0,5 à 5 bars, de préférence de 1 à 3 bars.

6. Corps thermo-isolant selon une des revendications 1 à 5, caractérisé en ce que pour servir de feuille enrobante, on utilise une feuille multicouche, de préférence une feuille de polyéthylène/aluminium, ou une feuille de polyéthylènelalcool de polyvinyle.

7. Corps thermo-isolant selon une des revendications 1 à 6, caractérisé en ce qu'on utilise des silicates poreux en guise de matériau inorganique poreux.
